# NEUE EUROPÄISCHE PATENTSCHRIFT

(11) **EP 1 070 027 B2**
(45) Veröffentlichungstag und Bekanntmachung des Hinweises auf die Entscheidung über den Einspruch: **17.10.2012**
(45) Hinweis auf die Patenterteilung: 28.04.2004
(21) Anmeldenummer: 99911770.8
(22) Anmeldetag: 11.03.1999
(51) Int. Cl.: C04B 35/573, C04B 35/80, C04B 35/628, D01F 11/12, F16D 69/02

(54) **VERSTÄRKUNGSFASERN UND FASERBÜNDEL, INSBESONDERE FÜR FASERVERBUNDWERKSTOFFE, VERFAHREN ZU DEREN HERSTELLUNG SOWIE FASERVERBUNDWERKSTOFF MIT VERSTÄRKUNGSFASERN**
REINFORCING FIBERS AND FIBER BUNDLES, ESPECIALLY FOR FIBER COMPOSITES, METHODS FOR THE PRODUCTION THEREOF, AND A FIBER COMPOSITE HAVING REINFORCING FIBERS
FIBRES DE RENFORCEMENT ET FAISCEAU DE FIBRES, NOTAMMENT POUR MATERIAUX COMPOSITES FIBREUX, PROCEDES PERMETTANT DE LES PRODUIRE ET MATERIAU COMPOSITE FIBREUX MUNI DE FIBRES DE RENFORCEMENT

(30) Priorität: 06.04.1998 DE 19815308
(43) Veröffentlichungstag der Anmeldung: 24.01.2001
(73) Patentinhaber: Brembo S.p.A., 24035 Curno (BG) (IT)
(72) Erfinder: BEHR, Thomas, D-89275 Elchingen (DE); DIETRICH, Gerd, D-88483 Burgrieden (DE); HAUG, Tilmann, D-88690 Uhldingen-Mühlhof (DE); REBSTOCK, Kolja, D-89073 Ulm (DE); SCHWARZ, Christian, D-89075 Ulm (DE); SPANGEMACHER, Björn, D-89075 Ulm (DE)
(74) Vertreter: Crippa, Paolo Ernesto
(86) Internationale Anmeldenummer: PCT/EP1999/001577
(87) Internationale Veröffentlichungsnummer: WO 1999/051539

(56) Entgegenhaltungen:
- EP-A1- 0 172 082
- EP-A2- 0 864 548
- WO-A-98/42635
- WO-A1-92/16469
- DE-A1- 3 933 039
- US-A- 4 397 901

## Beschreibung

Die Erfindung betrifft Verstärkungsfasern, insbesondere für Faserverbundwerkstoffe, nach Anspruch 1 sowie Faserbündel nach Anspruch 4 oder 5, deren Verwendung und ein Verfahren zu deren Herstellung.

Gattungsgemäße Verstärkungsfasern und Faserverbundwerkstoffe sind aus der nicht vorveröffentlichten deutschen Patentanmeldung 197 11 829.1 bekannt. Die daraus bekannten Verstärkungsfasern sind hochwarmfeste Fasern, die in Form von Kurzfaserbündeln vorliegen, Die Faserbündel sind mit einem zur Pyrolyse geeigneten Bindemittel imprägniert. Dazu werden die Faserbündel in das Bindemittel getaucht. Das Bindemittel wird anschließend verfestigt. Damit werden die Faserbündel zusammengehalten und mechanisch verstärkt. Die Faserbündel werden mit weiteren Bindemitteln und Füllmitteln vermischt, und die Mischung wird zu einem Grünkörper verpreßt, der anschließend unter vakuum oder Schutzgas zu einem porösen Formkörper pyrolysiert wird. Die Faserbündel sind dadurch mit einer Kohlenstoffschicht überzogen. Der Formkörper wird anschließend mit einer Siliziumschmelze infiltriert. Danach liegt ein C/SiC-Faserverbundwerkstoff vor, in dem die Faserbündel in einer Matrix auf SiC-Basis eingebettet sind. Die Kurzfaserbündel sind in der Matrix statistisch verteilt eingebettet, wobei die einzelnen Filamente weitgehend erhalten sind. Die Beschichtung aus Kohlenstoff hat ganz oder teilweise mit dem Matrixwerkstoff reagiert. Dadurch werden die Faserbündel vor dem aggressiven Angriff der Siliziumschmelze geschützt. Diese Faserverbundkeramik zeigt sehr gute tribologische Eigenschaften und ist darüber hinaus relativ preisgünstig und einfach herstellbar. Er ist insbesondere zur Herstellung von Bremsscheiben und/oder Bremsbelägen geeignet.

Dieser Werkstoff ist jedoch extrem hohen mechanischen Beanspruchungen, wie sie beispielsweise durch große Fahrzeugmassen oder extreme Geschwindigkeiten auftreten, nicht gewachsen.

Aus der US 4,397,901 ist ein weiterer Verbundwerkstoff mit Kohlefasern bekannt, wobei die Fasern mit einer pyrolytischen Kohlenstoffschicht überzogen sind, welche dann direkt mit Silizium umgesetzt wird. Der fertige Verbundkörper wird dann nochmals unter Verwendung von Trichlorsilan mit Siliziumcarbid CVD-beschichtet. Eine separate Schutzschicht für die Fasern ist nicht offenbart.

Aufgabe der Erfindung ist es daher, eine Verstärkungsfaser der oben genannten Art bereitzustellen, die eine noch höhere Festigkeit und bessere Quasiduktilität des Bauteils bieten, aber dennoch einfach und preisgünstig herstellbar und daher für die Serienproduktion geeignet sind.

Die Lösung besteht in einer Verstärkungsfaser mit den Merkmalen des Anspruchs 1 bzw. einem Faserbündel mit den Merkmalen des Anspruchs 4 oder 5, sowie in den jeweiligen Herstellungsverfahren.

Die erfindungsgemäßen Verstärkungsfasern bzw. Faserbündel sind also jeweils mit zwei zusätzlichen Schichten überzogen. Die untere, direkt auf der Faser bzw. dem Faserbündel aufgetragene Schicht ist aus Pech oder mindestens einem Zucker im Falle der Faser bzw. Pech im Falle des Faserbündels. Auf diese Schicht ist eine an sich bekannte Tauchbeschichtung aus einem pyrolysierbaren Bindemittel aufgebracht. Diese Fasern bzw. Faserbündel werden wie oben beschrieben in einen Grünkörper eingearbeitet, der dann zu einem porösen Formkörper pyrolysiert wird. Bei der Imprägnierung des porösen Formkörpers mit flüssigem Silizium wirkt die aus der Harzbeschichtung hervorgegangene Kohlenstoffschicht als "Opferschicht". Das flüssige Silizium reagiert mit dieser äußersten Schicht zu Siliziumcarbid. Dieses stellt eine Diffusionsbarriere für das flüssige Silizium dar, welches somit nicht weiter in die Faser bzw. das Faserbündel eindringen kann. Die tiefer gelegene Schicht aus Pech oder mindestens einem Zucker im Falle der Faser bzw. Pech im Falle des Faserbündels und die Verstärkungsfasern bzw. Faserbündel werden nicht angegriffen. Die Schicht aus Pech oder mindestens einem Zucker im Falle der Faser bzw. Pech im Falle des Faserbündels wirkt vielmehr als graphitische gleitfähige Struktur, d h. die Faser bzw. das Faserbündel kann an dieser Struktur entlang gleiten.

Die derart behandelte Fasern bzw. Faserbündel enthaltenden Verbundwerkstoffe zeichnen sich daher durch sehr gute mechanische Eigenschaften und besonders hohe Festigkeit aus. Die zusätzliche Schicht aus Pech oder mindestens einem Zucker im Falle der Faser bzw. Pech im Falle des Faserbündels bewirkt eine optimale Anbindung der Verstärkungsfasern an die Matrix. Sie wirken rißumleitend und sind längsbeweglich gleitend, was die guten Ergebnisse der Festigkeits- und Dreipunktbiegeversuche bewirkt. Faser-Pullout-Effekte sind möglich. Daraus resultieren sehr gute mechanische Eigenschaften des faserverstärkten Verbundwerkstoffs.

Durch die Verwendung dieser erfindungsgemäßen Verstärkungsfasern in Faserverbundwerkstoffen, auch in geringen Anteilen am Gesamtfaservolumen, lassen sich die Werte für Festigkeit und Dehnung, wie sie zum Beispiel im Dreipunkt-Biegetest nachgewiesen werden können, deutlich steigern. Die übrigen Parameter werden dadurch nicht beeinträchtigt.

Sind also die mechanischen Belastungen für das Bauteil extrem hoch, können Festigkeits- und Dehnungswerte weiter gesteigert werden. Bei besonders hohen mechanischen Beanspruchungen ist es durch die vorliegende Erfindung möglich, bekannte Verfahren zur preisgünstigen Herstellung von faserverstärkter Verbundkeramik dahingehend anzupassen, daß der Werkstoff besonders hohe Festigkeit nach außen mit deutlich gesteigerter Quasiduktilität des Bauteils nach innen bietet.

Das Verfahren zur Herstellung der erfindungsgemäßen Verstärungsfasern zeichnet sich dadurch aus, daß Kohlenstoff-Fasern zunächst mit Pech oder mindestens einem Zucker beschichtet werden. Die Fasern werden anschließend mit pyrolisierbarem Kunststoffmaterial versehen.

Die Beschichtung kann einmal durch Tauchbeschichtung, z. Bsp. Eintauchen in ein Pechbad erfolgen. Dieses Verfahren eignet sich insbesondere für Langfasern bzw. Endlosfasern.

Die Verwendung von Pech hat den weiteren Vorteil, daß kristalliner Kohlenstoff entsteht, der wesentlich langsamer mit flüssigem Silizium reagiert als eine Schicht aus amorphem Kohlenstoff, wie sie bei der Verwendung z. Bsp. eines Phenolharzes entsteht. Dadurch wird die Diffusionsbarriere für den amorphen Kohlenstoff noch verstärkt.

Eine weitere Ausgestaltung der Erfindung sieht vor, daß die Langfasern bzw. Endlosfasern nach der Beschichtung und vor der Verarbeitung zu einem Grünkörper verschnitten werden.

Erfindungsgemäß behandelte Faserbündel bestehen vorzugsweise aus etwa 1.000 bis 14.000 Einzelfasern mit mittleren Durchmessern von etwa 5 bis 10 µm und einer Länge von etwa 10 bis 30 mm. Auf diese Weise können auch kommerziell erhältliche Faserbündel verwendet werden. Dies ermöglicht eine kostengünstige Herstellung.

Es können alle gängigen Verstärkungsfasern verwendet werden. Bevorzugt werden Kohlenstoff-Fasern. Aber auch andere hochwarmfeste Fasern, wie Siliziumcarbid-Fasern oder Fasern auf der Basis von Si/C/B/N sind ebenso wie Metallfasern und Glasfasern grundsätzlich geeignet. Gut geeignet sind Titanfasern und auch Aramidfasern.

Sehr gute Ergebnisse erhält man bei ausschließlicher Verwendung der so behandelten Fasern zur Herstellung der Grünkörper. Positive Effekte lassen sich jedoch schon ab einem Faservolumenanteil von etwa 10%, insbesondere von etwa 15% am Fasergesamtvolumen messen. Besonders bevorzugt ist ein Anteil von etwa 40% am gesamten Faservolumen des Grünkörpers. Bei diesem Anteil ist das Kosten-Nutzen-Verhältnis besonders günstig.

Weitere vorteilhafte Weiterbildungen ergeben sich aus den Unteransprüchen.

Ausführungsbeispiele der vorliegenden Erfindung werden im folgenden anhand der beigefügten Zeichnungen näher beschrieben. Es zeigen:
- Figur 1: eine schematische Darstellung einer erfindungsgemäßen Verstärkungsfaser;
- Figur 2: eine schematische Darstellung einer Anlage zur Tauchbeschichtung von Langfasern;
- Figur 3: eine Aufnahme eines die erfindungsgemäßen Verstärkungsfasern enthaltenden porösen Formkörpers nach der Pyrolyse und vor der Infiltration mit flüssigem Silizium;
- Figur 4: eine rasterelektronenmikroskopische Aufnahme der Bruchfläche eines die erfindungsgemäßen Verstärkungsfasern enthaltenden C/SiC-Formkörpers nach der Dreipunkt-Biegeprüfung.

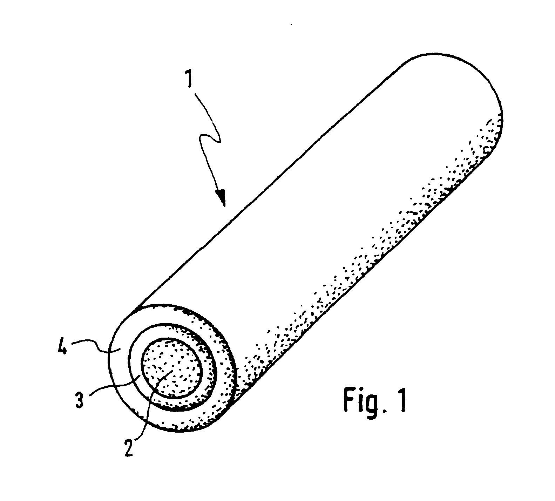

Die in Figur 1 schematisch dargestellte Verstärkungsfaser 1 weist einen inneren Kern 2 aus einer Kohlenstoffaser auf. Dieser Kern 2 ist mit einer Beschichtung 3 aus Pech oder mindestens einem Zucker versehen. Bevorzugt ist Pech.

Auf der Beschichtung 3 ist eine äußere Schicht 4 aus einem pyrolysierbaren Bindemittel aufgebracht. Dieses Bindemittel ist beispielsweise ein pyrolysierbares Harz oder Harzgemisch, vorzugsweise aus der Gruppe der Phenolharze. Die Schicht 4 wird bei der späteren Pyrolyse in Kohlenstoff umgewandelt. Der innere Bereich der Verstärkungsfaser 1, nämlich die Beschichtung 3 aus Pech oder mindestens einem Zucker und der von der Beschichtung 3 umhüllte Kern 2 der Verstärkungsfaser 1 werden vom flüssigen Silizium nicht angegriffen.

Erfindungsgemäß ist vorgesehen, daß statt einzelner Verstärkungsfasern auch ganze Faserbündel mit zwei entsprechenden
Schichten versehen sind. Derartige Faserbündel können aus etwa 1.000 bis 14.000 Einzelfasern (Filamenten) bestehen.

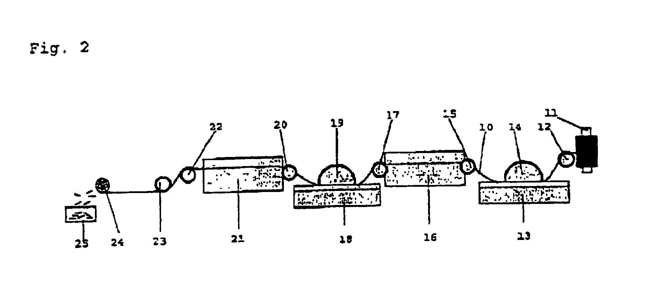

Diese Fasern bzw. Faserbündel sind auf verschiedene Weise herstellbar. Ein mögliches Verfahren eignet sich z. B. gut für die Beschichtung von Langfasern und ist in Figur 2 schematisch dargestellt. Die Langfasern 10 werden zunächst in einer Abspulvorrichtung von einer Spule 11 abgewickelt und über eine Umlenkrolle 12 in ein Pechbad 13 gelenkt. Das Pechbad kann bspw. aus einer Pechlösung in 1-Methyl-2-pyrrolidon bestehen. Die Langfasern 10 werden über eine Umlenkwalze 14 durch das Pechbad 10 geführt und anschließend mit dem anhaftenden Pech über eine weitere Umlenkrolle 15 in eine Trocknungsstation 16 eingebracht und dort getrocknet. Die Trocknung kann bspw. im Heißluftgegenstrom erfolgen. Dabei sollte das Lösemittel möglichst vollständig entfernt werden.

Anschließend werden die so beschichteten Langfasern 10 über eine Umlenkrolle 17 in ein Beschichtungsbad 18 eingebracht. Das Beschichtungsbad 18 enthält eine verdünnte Phenolharzlösung (Phenolharz in Furfurylalkohol; Verdünnung mit 5 bis 60 Gew.-% Ethanol). Die Langfasern 10 werden über eine Umlenkwalze 19 durch das Beschichtungsbad 18 geführt und anschließend wiederum über eine Umlenkrolle 20 in eine Trocknungsstation 21 eingebracht und dort wie beschrieben getrocknet.

Am Ende der Anlage befindet sich ein Schneidwerk 24, in das die Langfasern 10 über Umlenkrollen 22 und 23 geführt werden. Dort werden die Langfasern 10 in Kurzfaserbündel 25 mit der gewünschten Länge geschnitten.

Die mit derartigen Fasern herstellbaren Faserverbundwerkstoffe zeichnen sich durch besonders günstige mechanische Eigenschaften aus. Das Herstellungsverfahren für die Faserverbundwerkstoffe ist an sich bekannt und z. Bsp. in der deutschen Patentanmeldung 197 11 829.1 beschrieben.

Die Mischung zur Herstellung der Grünkörper besteht aus Fasern oder Faserbündeln, von denen mindesten ein Teil (vorzugsweise etwa 40 Vol.-%) erfindungsgemäß behandelt ist, einem pyrolysierbaren Bindemittel, z. Bsp. einem Phenolharz, und ggf. kohlenstoffhaltigen Füllmitteln wie Graphit oder Ruß sowie weiteren Füllmitteln wie Silizium, Carbiden, Nitriden oder Boriden, vorzugsweise Siliziumcarbid, Titancarbid oder Titanborid in Pulverform. Weitere bevorzugte Füllmittel zur Beeinflussung der Pyrolysekinetik, insbesondere zur Beschleunigung der Pyrolyse, sind z. Bsp. Polyvinylalkohol oder Methylcellulose. Ferner können der Mischung Zusätze von Eisen, Chrom, Titan, Molybdän, Nickel oder Aluminium zugegeben werden. Diese Zusätze verbessern das Verhalten des flüssigen Siliziums bei der Infiltration.

Die Bäder können auch bereits mit Füllstoffen wie z. Bsp. Graphit versetzt sein.

Die kohlenstoffhaltigen Füllmittel unterstützen den Zusammenhalt bei der Herstellung und anschließenden Pyrolyse des Grünkörpers und beschleunigen die Pyrolyse. Die weiteren Füllmittel dienen zur Einstellung der Verschleißfestigkeit der späteren Verbundkeramik.

Der Grünkörper kann z. Bsp. durch Warmfließpressen hergestellt werden. Dabei ist eine endformnahe Fertigung des Grünlings möglich. Da bei der Pyrolyse und Infiltration mit flüssigem Silizium wenig Schwindung auftritt, ist der Aufwand für die Nachbearbeitung gering.

Die oben beschriebene Mischung kann aber auch mit thermisch aushärtbaren Bindemitteln in einem Kneter gemischt, in einer Form gepreßt und unter Erwärmen zu einem Grünkörper ausgehärtet werden. Dabei kann der Grünkörper oder der aus der Pyrolyse des Grünkörpers resultierende poröse Formkörper auf eine gewünschte Form nachgearbeitet werden.

Die Porosität des Formkörpers läßt sich durch die Wahl der Zuschlagstoffe und ihre Menge einstellen.

### Ausführungsbeispiel 1

Kohlenstoff-Faserbündel aus Langfasern vom Typ T 800/6K der Firma Toray wurden durch Tränken in einem Pechbad und anschließendes Trocknen beschichtet. Die beschichteten Faserbündel wurden dann durch Tauchen in eine Phenolharzlösung und anschließendes Trocknen in einem Umluftschrank bei 130°C imprägniert. Die erfindungsgemäß behandelten Fasern wurden auf eine Länge von 24 mm geschnitten. Die so erhaltenen Kurzfaserbündel wurden zu einer Preßmasse verarbeitet. Dazu wurden unbehandelte und behandelte Faserbündel aus Fasern vom Typ T 800/6K der Firma Toray von 24 mm Länge mit Phenolharz, Titancarbid und Graphit als Füllstoff in einem Mischkneter zu einer Preßmasse verknetet. Der Faservolumenanteil an erfindungsgemäß beschichteten Fasern betrug 38%. Die Preßmasse wurde in einer endformnahen Matrize bei 80 bar verpreßt und bei 150°C zu einer formstabilen CFK-Scheibe ausgehärtet. Die Pyrolyse fand bei 800°C in einem Pyrolyseofen unter Schutzgas statt. Die anschließende Silizierung wurde unter Vakuum bei etwa 1600°C mit einer flüssigen Siliziumschmelze durchgeführt. Der resultierende C/SiC-Körper wurde auf Raumtemperatur heruntergekühlt.

Die Dreipunktbiegefestigkeit des so erhaltenen Körpers betrug im Mittel 117 MPa bei einer Dehnung von 0,47%.

### Beispiel 2 (nicht unter Schutz gestellt)

Es wurden Kohlenstoff-Faserbündel aus gleichen Anteilen von 3 mm langen Kurzfasern SCF3 und 6 mm langen Kurzfasern SCF6 der Firma SGL sowie T 800/6K Fasern der Firma Toray von 24 mm Länge verwendet. Die Faserbündel wurden wie oben beschrieben zunächst mit einer Schicht aus Pyrokohlenstoff und dann mit einer Schicht aus Phenolharz versehen. Die erfindungsgemäß behandelten Fasern wurden zu einer Preßmasse verarbeitet. Dazu wurden unbehandelte und behandelte Faserbündel der oben beschriebenen Zusammensetzung verwendet. Der Anteil der erfindungsgemäß beschichteten Fasern betrug wiederum 38%. Diese Faserbündel wurden mit Phenolharz, Titancarbid und Graphit als Füllstoff in einem Mischkneter zu einer Pressmasse verknetet. Die Preßmasse wurde in einer endformnahen Matrize bei 80 bar verpreßt und bei 150°C zu einer formstabilen CFK-Scheibe ausgehärtet. Die Pyrolyse fand bei 800°C in einem Pyrolyseofen unter Schutzgas statt. Die anschließende Silizierung wurde unter Vakuum bei etwa 1600°C mit einer flüssigen Siliziumschmelze durchgeführt. Der resultierende C/SiC-Körper wurde auf Raumtemperatur heruntergekühlt.

Der resultierende Körper zeigte eine Dreipunktbiegefestigkeit von etwa 107 MPa bei einer Dehnung von 0,42%.

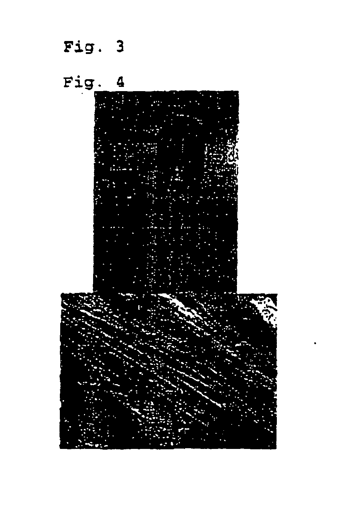

Figur 3 zeigt eine nach dem Ausführungsbeispiel 1 hergestellte Scheibe im C/C-Zustand, also nach dem Pyrolysieren des Grünkörpers, aber vor der Infiltration mit flüssigem Silizium. Figur 4 zeigt die Bruchstelle eines C/SiC-Körpers, der durch Infiltration mit flüssigem Silizium aus dem in Figur 3 gezeigten porösen Formkörper nach dem Ausführungsbeispiel 1 hergestellt wurde. Man sieht deutlich, daß die Verstärkungsfasern intakt geblieben, also vom flüssigen Silizium nicht angegriffen worden sind. Der Faser-Pull-Out-Effekt ist deutlich zu erkennen.

## Patentansprüche

1. Verstärkungsfaser (1), insbesondere auf der Basis von Kohlenstoff, Stickstoff, Bor, Silizium, Metall und/oder Glas, insbesondere für Faserverbundwerkstoffe, mit einem Kern (2), und einer Beschichtung, wobei die Verstärkungsfaser (1) eine doppelte Beschichtung aufweist, und wobei zwischen dem Kern (2) und einer Schicht aus einem pyrolysierbaren Bindemittel (4) eine zusätzliche Beschichtung (3) aus, Pech oder mindestens einem Zucker vorgesehen ist, und wobei die Beschichtung (3) 100 bis 300 nm dick ist und die Schicht (4) 200 bis 800 nm dick ist.

2. Verstärkungsfaser nach Anspruch 1,
**dadurch gekennzeichnet,**
**daß** die Beschichtung (3) eine Tauchbeschichtung aus Pech ist.

3. Verstärkungsfaser nach einem der vorhergehenden Ansprüche,
**dadurch gekennzeichnet,**
**daß** der Kern (2) eine Kohlenstoff-Faser oder eine Siliziumcarbid-Faser ist.

4. Faserbündel aus Verstärkungsfasern auf der Basis von Kohlenstoff, Stickstoff, Bor, Silizium, Metall und/oder Glas insbesondere für Faserverbundwerkstoffe,
**dadurch gekennzeichnet,**
**daß** das Faserbündel ganz oder teilweise aus Verstärkungsfasern nach einem der Ansprüche 1 bis 3 besteht.

5. Faserbündel aus Verstärkungsfasern, insbesondere auf der Basis von Kohlenstoff, Stickstoff, Bor, Silizium, Metall und/oder Glas, insbesondere für Faserverbundwerkstoffe, wobei das Faserbündel eine doppelte Beschichtung aufweist, und wobei unter einer Schicht aus einem pyrolysierbaren Bindemittel eine zusätzliche Beschichtung aus Pech vorgesehen ist, und die Schicht aus pyrolysierbarem Bindemittel 200 bis 800 nm dick ist.

6. Faserbündel nach Anspruch 5,
**dadurch gekennzeichnet,**
**daß** die zusätzliche Beschichtung eine Tauchbeschichtung aus Pech ist.

7. Faserbündel nach einem der Ansprüche 5 oder 6,
**dadurch gekennzeichnet,**
**daß** es aus Kohlenstoff-Fasern und/oder Silizium-carbid-Fasern zusammengesetzt ist.

8. Faserbündel nach einem der Ansprüche 4 bis 7,
**dadurch gekennzeichnet,**
**daß** es aus etwa 1.000 bis 14.000 Einzelfasern besteht und/oder daß es aus Einzelfasern mit einem mittleren Durchmesser von etwa 5 bis 10 µm und/ oder einer Länge von etwa 10 bis 30 mm besteht.

9. Verfahren zur Herstellung einer Verstärkungsfaser nach einem der Ansprüche 1 bis 3 bzw. eines Faserbündels nach einem der Ansprüche 4 bis 8, mit folgenden Verfahrensschritten:
- Beschichtung der Verstärkungsfaser bzw. des Faserbündels mit einer Schicht aus Pech;
- Überziehen der so erhältlichen Beschichtung
mit einer Schicht aus einem pyrolysierbaren Bindemittel.

10. Verlahren nach Anspruch 9,
**dadurch gekennzeichnet,**
**daß** die Verstärkungsfaser bzw. das Faserbündel durch Eintauchen in eine Pechlösung mit einer Beschichtung aus Pech versehen wird.

11. Verfahren nach einem der Ansprüche 9 oder 10,
**dadurch gekennzeichnet,**
**daß** als pyrolysierbares Bindemittel Harz oder Harzgemisch aus der Gruppe der Phenolharze verwendet wird.

12. Verfahren nach einem der Ansprüche 10 oder 11,
**dadurch gekennzeichnet,**
**daß** die Pechlösung und/ oder die Lösung aus pyrolysierbarem Bindemittel Füllstoffe enthält.

13. Verfahren nach einem der Ansprüche 9 bis 12,
**dadurch gekennzeichnet,**
**daß** Langfasern oder Kurzfasern bzw. Faserbündel aus Langfasern oder Kurzfasern verwendet werden.

14. Verfahren nach Anspruch 13,
**dadurch gekennzeichnet,**
**daß** die Langfasern nach der Behandlung geschnitten werden.

15. Verwendung der Verstärkungsfaser nach einem der Ansprüche 1 bis 3 bzw. der Faserbündel nach einem der Ansprüche 4 bis 8 bzw. der mit einem Verfahren nach einem der Ansprüche 9 bis 14 erhältlichen Verstärkungsfasern bzw. Faserbündel zur Herstellung von Faserverbundwerkstoffen

## Claims

1. A reinforcing fibre (1), in particular based on carbon, nitrogen, boron, silicon, metal and/or glass, in particular for fibre composite materials, having a core (2) and a coating, the reinforcing fibre (1) having a double coating and there being provided between the core (2) and a layer of a pyrolisable fixing agent (4) an additional coating (3) of pitch or at least one sugar, and the coating (3) being 100 to 300 nm thick and the layer (4) being 200 to 800 nm thick.

2. A reinforcing fibre in accordance with claim 1,
**characterised in that**
the coating (3) is a dip coating of pitch.

3. A reinforcing fibre in accordance with one of the preceding claims,
**characterised in that**
the core (2) is a carbon fibre or a silicon carbide fibre.

4. A fibre bundle of reinforcing fibres (1) based on carbon, nitrogen, boron, silicon, metal and/or glass, in particular for fibre composite materials,
**characterised in that**
the fibre bundle consists entirely or partially of reinforcing fibres in accordance with one of claims 1 to 3.

5. A fibre bundle of reinforcing fibres (1) based on carbon, nitrogen, boron, silicon, metal and/or glass, in particular for fibre composite materials, the fibre bundle having a double coating and an additional coating of pitch being provided under a layer of pyrolisable binding agent, and the layer of pyrolisable binding agent being 200 to 800 nm thick.

6. A fibre bundle in accordance with claim 5,
**characterised in that**
the additional coating is a dip coating of pitch.

7. A fibre bundle in accordance with one of claims 5 or 6,
**characterised in that**
it is composed of carbon fibres and/or silicon carbide fibres.

8. A fibre bundle in accordance with one of claims 4 to 7,
**characterised in that**
it consists of approx., 1,000 to 14,000 individual fibres and/or it consists of individual fibres with a mean diameter of some 5 to 10 µm and/or a length of some 10 to 30 mm.

9. A process for the production of a reinforcing fibre in accordance with one of claims 1 to 3 or a fibre bundle in accordance with one of claims 4 to 8 having the following process steps:
- the coating of the reinforcing fibre or fibre bundle with a layer of pitch,
- the covering the coating obtained in this manner with a layer of a pyrolisable binding agent.

10. A process in accordance with claim 9,
**characterised in that**
the reinforcing fibre or the fibre bundle is provided with a coating of pitch by dipping in a pitch solution.

11. A process in accordance with one of claims 9 or 10,
**characterised in that**
a resin or a resin mixture of a group of phenol reins is used as the pyrolisable binding agent.

12. A process in accordance with one of claims 10 or 11,
**characterised in that**
the pitch solution and/or the solution of pyrolisable binding agent contains filler materials.

13. A process in accordance with one of claims 9 to 12,
**characterised in that**
long fibres or short fibres or fibre bundles made of long fibres or short fibres are used.

14. A process in accordance with claim 13,
**characterised in that**
the long fibres are cut after treatment.

15. The use of the reinforcing fibres in accordance with one of claims 1 to 3 or of the fibre bundles in accordance with one of claims 4 to 8 or of the reinforcing fibres or fibre bundles which can be obtained using a process in accordance with claims 9 to 14 to produce fibre composite materials.

## Revendications

1. Fibre de renforcement (1), en particulier basée sur du carbone, de l'azote, du bore, du silicium, du métal et/ou du verre, en particulier pour matériaux composites fibreux, comportant un noyau (2) et un revêtement, où la fibre de renforcement (1) présente un double revêtement et où un revêtement supplémentaire (3) composé de poix ou, au moins d'un sucre, est prévu entre le noyau (2) et une couche d'un liant (4) pouvant être pyrolysé, et où le revêtement (3) est d'une épaisseur de 100 à 300 nm et le revêtement (4) est d'une épaisseur de 200 à 400 nm.

2. Fibre de renforcement selon la revendication 1, **caractérisée en ce que**, le revêtement (3) est un revêtement par immersion de poix.

3. Fibre de renforcement selon l'une quelconque des revendications précédentes, **caractérisée en ce que**, le noyau (2) est une fibre de carbone ou une fibre de carbure de silicium.

4. Faisceau de fibres de fibres de renforcement, en particulier basé sur du carbone, de l'azote, du bore, du silicium, du métal et/ou du verre, en particulier pour matériaux composites fibreux, **caractérisé en ce que**, le faisceau de fibres, se compose intégralement ou partiellement de fibres de renforcement selon l'une quelconque des revendications 1 à 3.

5. Faisceau de fibres de fibres de renforcement, en particulier basé sur du carbone, de l'azote, du bore, du silicium, du métal et/ou du verre, en particulier pour matériaux composites fibreux, où le faisceau de fibres présente un double revêtement et où sous une couche d'un liant pouvant être pyrolysé, est prévue une couche supplémentaire composée de poix et la couche de liant pouvant être pyrolysé est d'une épaisseur de 200 à 800 nm

6. Faisceau de fibres selon la revendication 5, **caractérisé en ce que**, le revêtement supplémentaire est un revêtement par immersion de poix.

7. Faisceau de fibres selon l'une quelconque des revendications 5 et 6, **caractérisé en ce qu'**il est composé de fibres de carbone et/ou fibres de carbure de silicium.

8. Faisceau de fibres selon l'une quelconque des revendications 4 à 7, **caractérisé en ce qu'**il est constitué d'environ 1 000 à 14 000 fibres individuelles et/ou qu'il est constitué de fibres individuelles d'un diamètre moyen d'environ 5 à 10 µm et/ou d'une longueur d'environ 10 à 30 mm.

9. Procédé de fabrication d'une fibre de renforcement selon l'une quelconque des revendications 1 à 3 ou d'un faisceau de fibres selon l'une quelconque des revendications 4 à 8 comportant les étapes suivantes :
- revêtement de la fibre de renforcement ou du faisceau de fibres d'une couche composée de poix ;
- recouvrement du revêtement pouvant être ainsi obtenu d'une couche d'un liant pouvant être pyrolysé.

10. Procédé selon la revendication 9, **caractérisé en ce que**, la fibre de renforcement ou le faisceau de fibres est pourvu d'un revêtement de poix par immersion dans une solution de poix.

11. Procédé selon l'une quelconque des revendications 9 à 10, **caractérisé en ce que**, en tant que liant pouvant être pyrolysé, de la résine ou un mélange de résine du groupe des résines phénoliques est utilisé.

12. Procédé selon l'une quelconque des revendications 10 à 11, **caractérisé en ce que**, la solution de poix et/ou la solution de liant pouvant être pyrolysé contient des produits de remplissage.

13. Procédé selon l'une quelconque des revendications 9 à 12, **caractérisé en ce que**, des fibres longues ou des fibres courtes ou des faisceaux de fibres longues ou de fibres courtes sont utilisés.

14. Procédé selon la revendication 13, **caractérisé en ce que**, les fibres longues sont coupées après le traitement.

15. Utilisation de la fibre de renforcement selon l'une quelconque des revendications 1 à 3 ou du faisceau de fibres selon l'une quelconque des revendications 4 à 8 ou des fibres de renforcement ou des faisceaux de fibres qu'il est possible d'obtenir par un procédé selon l'une quelconque des revendications 9 à 14 pour la fabrication de matériaux composites fibreux.
